# EUROPEAN PATENT APPLICATION

(11) **EP 4 831 730 A1**
(43) Date of publication of application: **28.10.2026**
(21) Application number: 26173055.0
(22) Date of filing: 17.04.2026
(51) Int. Cl.: G02F 1/13357, F21V 8/00

(54) **DISPLAY DEVICE**

(30) Priority: 21.04.2025 KR 20250051835
(71) Applicant: LG Electronics Inc., Yeongdeungpo-gu Seoul 07336 (KR)
(72) Inventor: MOON, Jungmo, Seoul (KR); KIM, Seho, Seoul (KR)
(74) Representative: Schott, Jakob Valentin

(57) **Abstract**

A display device is provided. The display device according to the present disclosure includes: a display panel; a frame disposed behind the display panel; a light guide plate disposed between the display panel and the frame; a housing including a rear part disposed between the light guide plate and the frame and supporting the light guide plate, and a side part intersecting the rear part and facing one side of the light guide plate; a substrate disposed between the side part and the one side of the light guide plate and coupled to the side part; a light source mounted on the substrate and configured to provide light toward the one side of the light guide plate; and a reflective sheet disposed between the rear part of the housing and the light guide plate, wherein the reflective sheet includes: a main sheet covering the light guide plate that faces the display panel; and a side sheet extending from the main sheet toward the substrate, wherein at least a portion of the side sheet has a lower reflectance than reflectance of the main sheet.

## Description

### BACKGROUND OF THE INVENTION

### 1. Field of the invention

The following description relates to a display device.

### 2. Description of the Related Art

With the development of the information society, there have been growing demands for various types of display devices, and in order to meet these demands, various display devices, such as a liquid crystal display (LCD), a plasma display panel (PDP), an electroluminescent display (ELD), a vacuum fluorescent display (VFD), an organic light emitting diode (OLED), etc., have been studied and used recently.

Among these devices, the LCD panel includes a TFT substrate and a color substrate which are positioned opposite each other with a liquid crystal layer interposed therebetween, and displays images by using light provided by a backlight unit (BLU). Recently, many studies have been conducted on a structure for improving uniformity and luminance of light provided to the LCD panel by an edge lighting BLU in which light sources are positioned on the edges of a display device.

### SUMMARY OF THE INVENTION

It is an objective of the present disclosure to solve the above and other problems.

It is another objective of the present disclosure to improve light uniformity of a display device.

It is yet another objective of the present disclosure to improve luminance of a display device.

It is yet another objective of the present disclosure to improve a dark area of a display device.

It is yet another objective of the present disclosure to reduce the concentration of light(hot spots) that occurs at a lower side of a display panel.

In accordance with an aspect of the present disclosure, the above and other objectives can be accomplished by providing a display device including: a display panel; a frame disposed behind the display panel; a light guide plate disposed between the display panel and the frame; a housing including a rear part disposed between the light guide plate and the frame and supporting the light guide plate, and a side part intersecting the rear part and facing one side of the light guide plate; a substrate disposed between the side part and the one side of the light guide plate and coupled to the side part; a light source mounted on the substrate and configured to provide light toward the one side of the light guide plate; and a reflective sheet disposed between the rear part of the housing and the light guide plate, wherein the reflective sheet includes: a main sheet covering the light guide plate that faces the display panel; and a side sheet extending from the main sheet toward the substrate, wherein at least a portion of the side sheet has a lower reflectance than reflectance of the main sheet.

### EFFECTS OF THE INVENTION

A display device according to the present disclosure has the following effects.

According to at least one of the embodiments of the present disclosure, light uniformity of a display device may be improved.

According to at least one of the embodiments of the present disclosure, luminance of a display device may be improved.

According to at least one of the embodiments of the present disclosure, a dark area of a display device may be improved.

According to at least one of the embodiments of the present disclosure, the concentration of light(hot spots) that occurs at a lower side of a display panel may be reduced.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the spirit and scope of the present disclosure will become apparent to those skilled in the art from this detailed description.

### BRIEF DESCRIPTION OF THE DRAWINGS

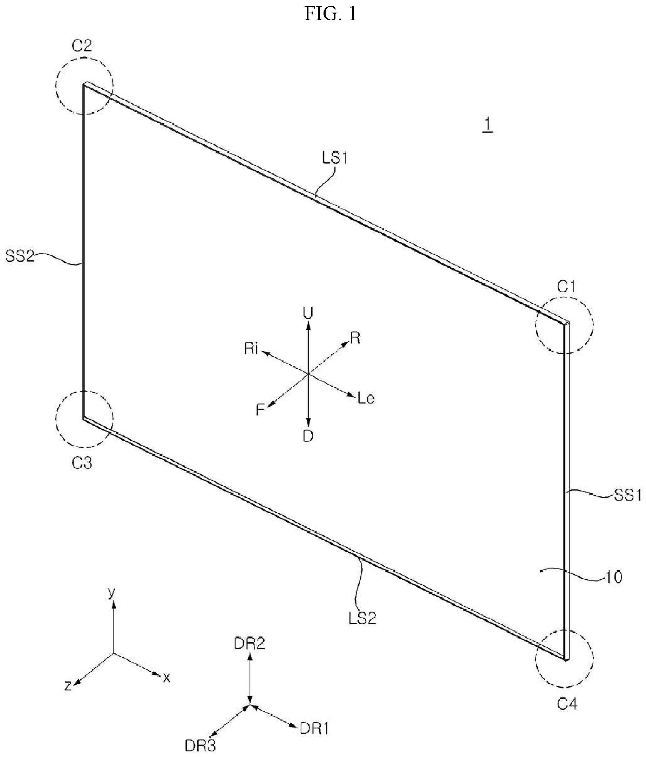

FIGS. 1 to 21 are diagrams illustrating examples of a display device according to embodiments of the present disclosure.

### DETAILED DESCRIPTION OF THE PREFERRED EMBODIMENTS

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In addition, it will be noted that a detailed description of known arts will be omitted if it is determined that the detailed description of the known arts can obscure the embodiments of the present disclosure. Further, the accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

A singular representation may include a plural representation unless context clearly indicates otherwise.

In the present application, it should be understood that the terms "comprises," "includes," "has," etc. specify the presence of features, numbers, steps, operations, elements, components, or combinations thereof described in the specification, but do not preclude the presence or addition of one or more other features, numbers, steps, operations, elements, components, or combinations thereof.

Referring to FIG. 1, a display device 1 includes a display panel 10. The display panel 10 may display an image.

The display device 1 includes a first long side LS1, a second long side LS2 opposite to the first long side LS1, a first short side SS1 adjacent to the first long side LS1 and the second long side LS2, and a second short side SS2 opposite to the first short side SS1. For convenience of explanation, it is illustrated and described that lengths of the first and second long sides LS1 and LS2 are longer than lengths of the first and second short sides SS1 and SS2, but it is also possible that the lengths of the first and second long sides LS1 and LS2 are approximately equal to the lengths of the first and second short sides SS1 and SS2

A direction parallel to the long sides LS1 and LS2 of the display device 1 may be referred to as a left-right direction or a first direction DR1. A direction parallel to the short sides SS1 and SS2 of the display device 1 may be referred to as an up-down direction or a second direction DR2. A direction perpendicular to the long sides LS1 and LS2 and the short sides SS1 and SS2 of the display device 1 may be referred to as a front-rear direction or a third direction DR3.

A side on which the display panel 10 displays an image may be referred to as a front side (F, z), and a side opposite thereto may be referred to as a rear side (R). The first long side LS1 may be referred to as an upper side (U, y), and the second long side LS2 may be referred to as a lower side (D). The first short side SS1 may be referred to as a left side (Le, x), and the second short side SS2 may be referred to as a right side (Ri).

The first long side LS1, the second long side LS2, the first short side SS1, and the second short side SS2 may be referred to as edges of the display device 1. Further, positions where the first long side LS1, the second long side LS2, the first short side SS1, and the second short side SS2 meet each other may be referred to as corners.

For example, a position where the first short side SS1 and the first long side LS1 meet may be referred to as a first corner C1. A position where the first long side LS1 and the second short side SS2 meet may be referred to as a second corner C2. A position where the second short side SS2 and the second long side LS2 meet may be referred to as a third corner C3. A position where the second long side LS2 and the first short side SS1 meet may be referred to as a fourth corner C4.

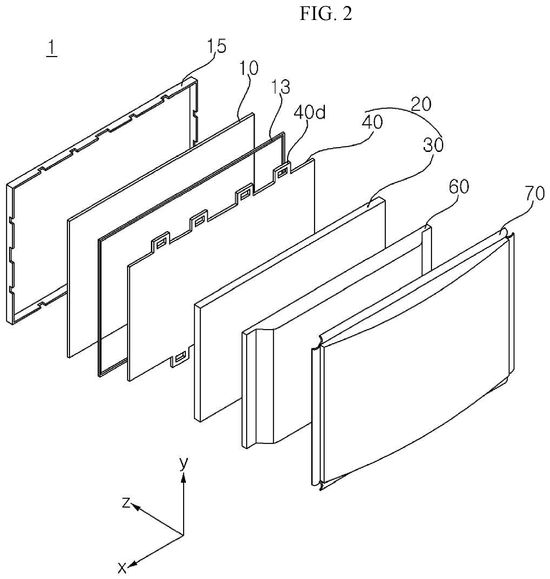

Referring to FIG. 2, the display device 1 may include a display panel 10, a front cover 15, a guide panel 13, a backlight unit 20, a frame 60, and/or a back cover 70.

The display panel 10 may define a front surface of the display device 1 and display an image. The display panel 10 may display an image in such a manner that each of a plurality of pixels outputs red, green, or blue (RGB) light in accordance with timing. The display panel 10 may be divided into an active area in which an image is displayed and an inactive area in which no image is displayed. The display panel 10 may include a front substrate and a rear substrate that are opposite each other with a liquid crystal layer interposed therebetween. The display panel 10 may be referred to as an LCD panel.

The front substrate may include a plurality of pixels, each of which consists of red, green, and blue subpixels. The front substrate may output light corresponding to red, green, or blue color in response to a control signal.

The rear substrate may include switching elements. The rear substrate may switch on or off pixel electrodes. For example, the pixel electrode may change a molecular arrangement of a liquid crystal layer in response to a control signal received from the outside. The liquid crystal layer may include liquid crystal molecules. The arrangement of the liquid crystal molecules may be changed depending on a voltage difference between the pixel electrode and a common electrode. The liquid crystal layer may transmit light, provided from the backlight unit 20, to the front substrate or may block the light.

The front cover 15 may cover a front surface and at least a portion of a side (or lateral) surface of the display panel 10. The front cover 15 may be divided into a front cover positioned on the front surface of the display panel 10 and a side cover positioned on the side surface of the display panel 10. The front cover and the side cover may be provided separately, or may be provided as one body. At least one of the front cover or the side cover may be omitted.

The guide panel 13 may surround the periphery of the display panel 10 and may cover the side surface of the display panel 10. The guide panel 13 may be coupled to the display panel 10 or support the display panel 10. The guide panel 13 may be referred to as a panel frame 13 or a panel supporter 13.

The backlight unit 20 may be positioned at the rear of the display panel 10. The backlight unit 20 may include light sources. The backlight unit 20 may be coupled to the frame 60 at the front of the frame 60. The backlight unit 20 may be driven by a full driving scheme or a partial driving scheme such as local dimming or impulsive driving, etc. The backlight unit 20 may include an optical sheet 40 and an optical layer 30.

The optical sheet 40 may allow light of the light source to be evenly transmitted to the display panel 10. The optical sheet 40 may be composed of a plurality of layers. For example, optical sheet 40 may include a prism sheet or a diffuser sheet, etc. A coupling portion 40d of the optical sheet 40 may be coupled to the front cover 15, the frame 60, or the bac cover 70.

The frame 60 may be disposed at the rear of the backlight unit 20 and may support components of the display device 1. For example, components, such as the backlight unit 20 and a printed circuit board (PCB) on which a plurality of electronic components are disposed, may be coupled to the frame 60. The frame 60 may include a metal material such as an aluminum alloy and the like. The frame 60 may be referred to as a main frame or a module cover.

The back cover 70 may cover the rear of the frame 60. The back cover 70 may be coupled to the frame 60 and/or the front cover 15. For example, the back cover 70 may be injection-molded from resin. In another example, the back cover 70 may include a metal material.

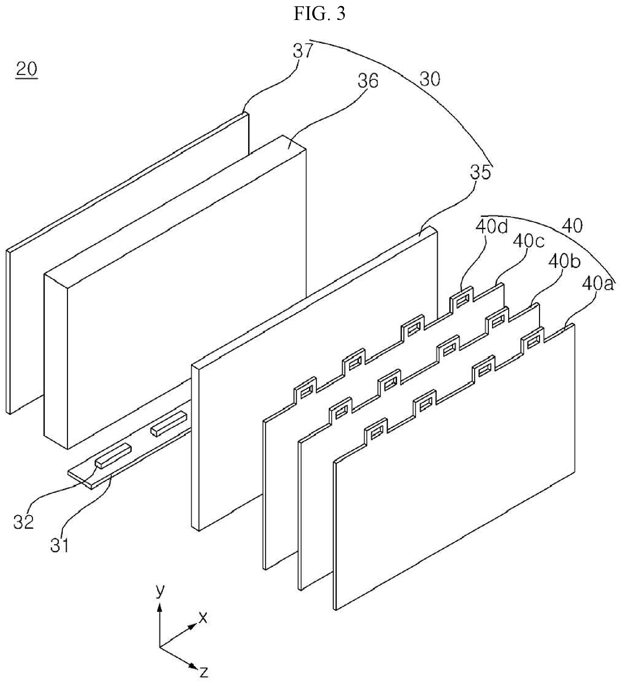

Referring to FIG. 3, the optical layer 30 may include a substrate 31, at least one light assembly 32, a reflective sheet 37, and a light guide plate 36. The optical sheet 40 may be disposed in front of the optical layer 30. The light assembly 32 may be referred to as a light source 32 or a plurality of light sources 32.

The substrate 31 may extend in the left-right direction and may be adjacent to the perimeter of the light guide plate 36. For example, the substrate 31 may be adjacent to a lower side of the light guide plate 36. At least one light assembly 32 may be mounted on the substrate 31. That is, the light source of the backlight unit 20 may be disposed at the edge of the backlight unit 20. An electrode pattern may be formed on the substrate 31 to connect an adapter and the light assembly 32. For example, the electrode pattern may be a carbon nanotube (CNT) electrode pattern. The substrate 31 may be made of at least one of polyethylene terephthalate (PET), glass, polycarbonate (PC), or silicon. The substrate 31 may be a printed circuit board (PCB) on which at least one light assembly 32 is mounted.

The light assembly 32 may be a light emitting diode (LED) chip or an LED package including at least one LED chip. The light assembly 32 may be composed of a white LED or a colored LED that emits at least one color among colors such as red, green, blue, etc. The colored LED may include at least one of a red LED, a green LED, and a blue LED.

The light guide plate 36 may be disposed behind the optical sheet 40. Most of the light provided by the light assembly 32 may be transmitted into the light guide plate 36. The light guide plate 36 may reflect light, transmitted from the light assembly 32, in a forward direction.

The reflective sheet 37 may be disposed at the rear of the light guide plate 36. The reflective sheet 37 may reflect the light provided by the light assembly 32 or light reflected from the light guide plate 36 in a forward direction. For example, the reflective sheet 36 may include a highly reflective metal, such as at least one of aluminum (Al), silver (Ag), gold (Au), or titanium dioxide (TiO2), and/or a metal oxide.

The optical sheet 40 may include at least one sheet. For example, the optical sheet 40 may include one or more prism sheets and/or one or more diffuser sheets. The plurality of sheets of the optical sheet 40 may be adhered to or in close contact with each other.

Specifically, the optical sheet 40 may be composed of a plurality of sheets having different functions. For example, the optical sheet 40 may include a first optical sheet 40a, a second optical sheet 40b and a third optical sheet 40c. For example, the first optical sheet 40a may be a diffuser sheet, and the second optical sheet 40b and the third optical sheet 40c may be prism sheets. The diffuser sheet may prevent the light, emitted from the diffuser plate 35, from being locally concentrated, thereby offering uniform distribution of light. The prism sheets may collect the light emitted from the diffuser plate 35 and transmit the light to the display panel 10. The number and/or positions of the diffuser sheet and the prism sheets may vary.

Further, the optical layer 30 may also include a diffuser plate 35 disposed between the light guide plate 36 and the optical sheet 40.

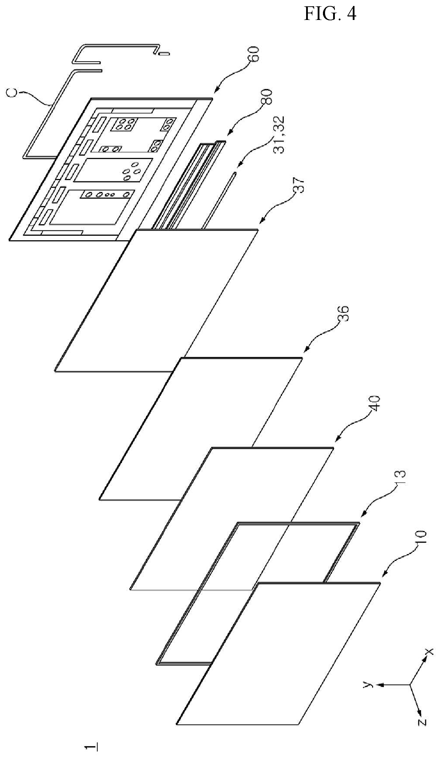

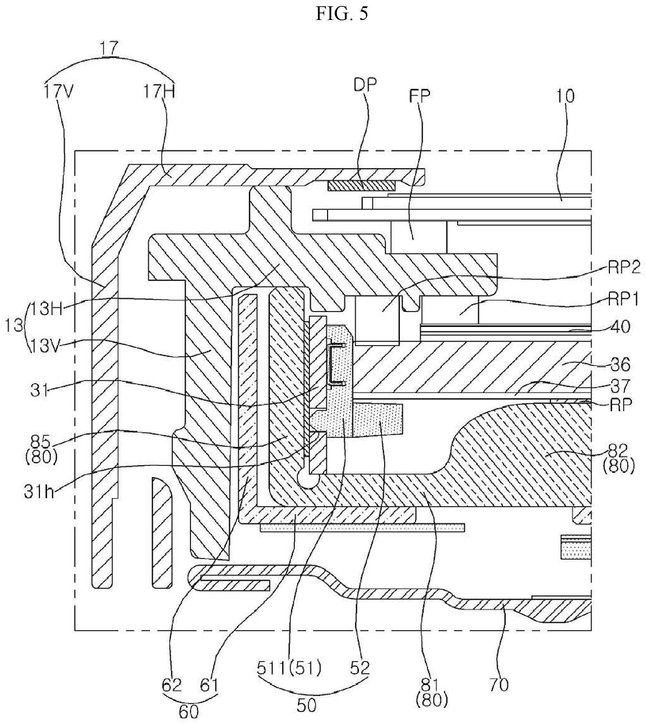

Referring to FIGS. 4 and 5, the frame 60 may include a flat portion 61 and a bending portion 62. The flat portion 61 may define the front surface of the frame 60 and may be generally flat. The bending portion 62 may be bent forward at the edge of the flat portion 61 and may extend along the edge of the flat portion 61.

A housing 80 may be disposed on the flat portion 61. The housing 80 may be adjacent to the lower side of the frame 60. The housing 80 may include a rear part 81 and a side part 85. The rear part 18 may be coupled or fixed to the flat portion 61. The side part 85 may be bent forward at a lower end of the rear part 81.

The housing 80 may include a protrusion 82 protruding forward from the front surface of the rear part 81. The side part 85 may protrude more forwardly than the protrusion 82. The side part 85 may be disposed between the bending portion 62 and the protrusion 82 and may be spaced apart from the bending portion 62 and the protrusion 82. The housing 80 may include a metal material, such as aluminum (Al). The housing 80 may be referred to as a heat sink.

A guide panel 13 may include a vertical portion 13V and a horizontal portion 13H. The vertical portion 13V may extend along the bending portion 62 and may cover the outside of the bending portion 62. The horizontal portion 13H may intersect the vertical portion 13V and may partially cover the front of the housing 80 and the frame 60.

The light guide plate 36 may be disposed between the horizontal portion 13H and the protrusion 82. The reflective sheet 37 may face the rear surface of the light guide plate 36. A pad RP may be disposed between the reflective sheet 37 and the protrusion 82 and attached to the protrusion 82. The optical sheet 40 may be disposed on the front surface of the light guide plate 36. A portion of the rear surface of the light guide plate 36, which is adjacent to the lower side of the light guide plate 36, may be supported by the protrusion 82. Further, portions adjacent to the upper side, the left side, and the right side of the light guide plate 36 may be supported by the frame 60.

The display panel 10 may be opposite the optical sheet 40 with respect to the horizontal portion 13H. A front pad FP may be disposed between the display panel 10 and the horizontal portion 13H and coupled to the horizontal portion 13H. A first rear pad RP1 may be disposed between the horizontal portion 13H and the optical sheet 40 and coupled to the horizontal portion 13H. A second rear pad RP2 may be disposed between the horizontal portion 13H and the light guide plate 36 and coupled to the horizontal portion 13H.

An end frame 17 may include a first part 17V and a second part 17H. The first part17V may extend along the vertical portion 13V and may cover the outside of the vertical portion 13V. The second part 17H may intersect the first part 17V and may partially cover the front of the display panel 10 and the guide panel 13. A pad DP may be disposed between the second part 17H and the display panel 10 and coupled to the second part 17H.

A cable C (see FIG. 4) may be electrically connected to the display panel 10 and a source Printed Circuit Board (PCB) (not shown). The cable C (see FIG. 4) may pass between the guide panel 10 and the end frame 17 and may be connected to the source PCB (not shown) at the rear of the frame 60. For example, the cable C (see FIG. 4) may be a Flexible Flat Cable (FFC).

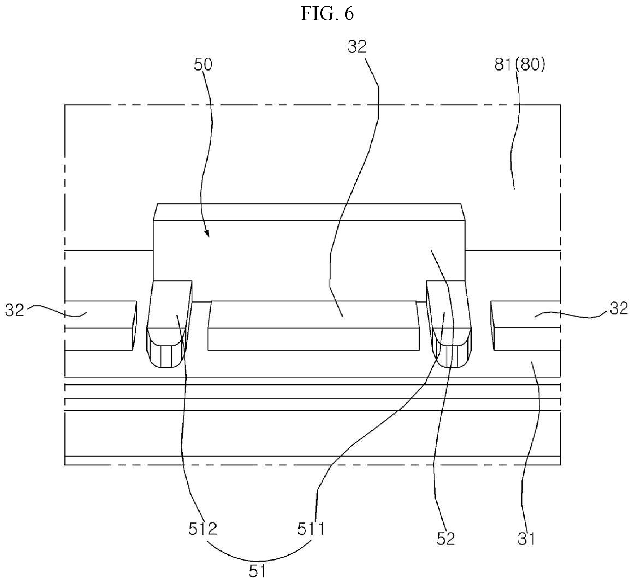

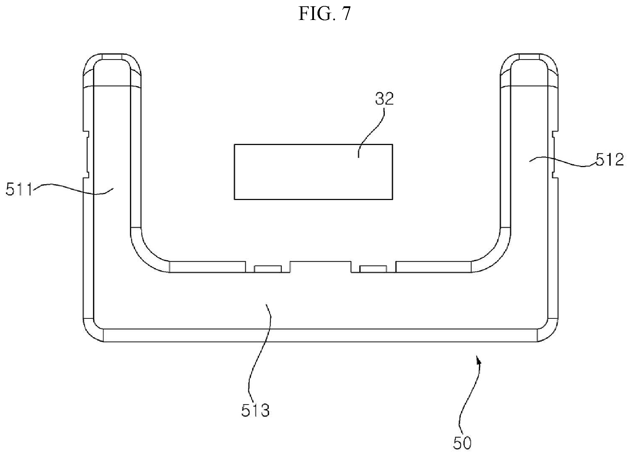

Referring to FIGS. 6 and 7 along with FIG. 5, the substrate 31 may be disposed on the side part 85 of the housing 80. The substrate 31 may be elongated along the lower side of the light guide plate 36. The plurality of light sources 32 may be mounted on the substrate 31.

A spacer 50 may be mounted on the substrate 31. The spacer 50 may be disposed around the plurality of light sources 32. Supports 511 and 512 of the spacer 50 may contact the substrate 31 and may be disposed between the plurality of light sources 32. The supports 511 and 512 may face the lower side of the light guide plate 36. A protruding wall 52 of the spacer 50 may extend from the supports 511 and 512 and may be disposed between the light guide plate 36 and the rear part 81 of the housing 80. The protruding wall 52 may be adjacent to the rear surface of the light guide plate 36.

Accordingly, when the light guide plate 36 is thermally expanded, the protruding wall 52 may prevent the lower end of the light guide plate 36 from being warped or misaligned with the light sources 32. The spacer 50 may be referred to as a guard 50, a protector 50, or a barrier 50. For example, the spacer 50 may be injection-molded from resin or silicone.

The spacer 50 may be disposed on the substrate 31 between the substrate 31 and the protrusion 82. The spacer 50 may include a base 51 that contacts the substrate 31. The base 51 may be generally U-shaped. The base 51 may include a first support 511 and a second support 512. The first support 511 may be disposed between the plurality of light sources 32. The second support 512 may be disposed between the plurality of light sources 32 and may be spaced apart from the first support 511 to the right.

At least one light source 32 may be disposed between the first support 511 and the second support 512. The first support 511 may be referred to as a first leg 511, and the second support 512 may be referred to as a second leg 512.

The protruding wall 52 may be omitted. The protruding wall 52 may be referred to as a protrusion 52 or a pedestal 52. A bridge 513 may connect the first support 511 and the second support 512. The bridge 513 may connect a lower end of the first support 511 and a lower end of the second support 512. The light source 32 may be disposed between the first support 511 and the second support 512. The light source 32 may be aligned with the center of the bridge 513. The spacer 50 may partially cover the perimeter of the light source 32.

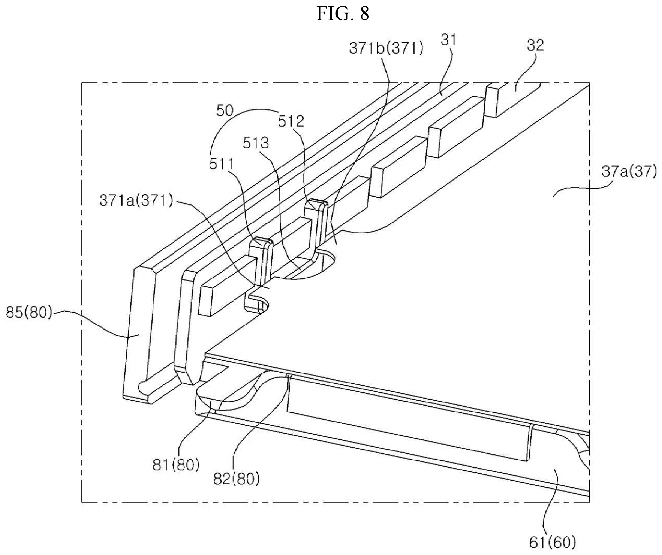

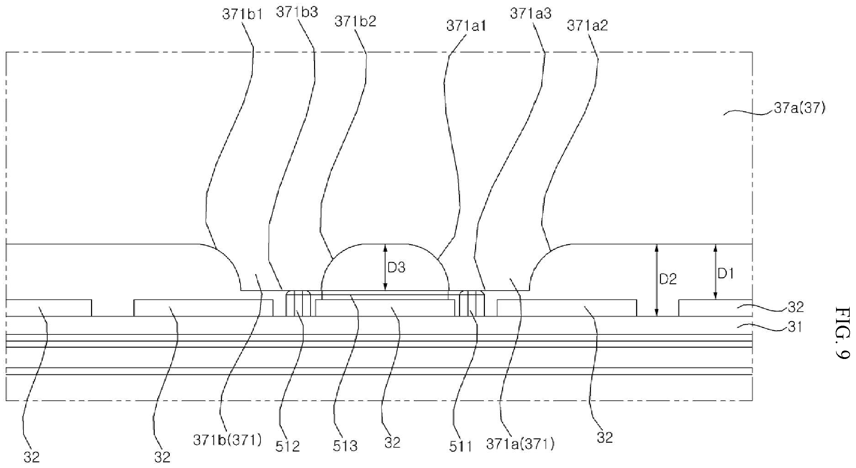

Referring to FIGS. 8 and 9, the reflective sheet 37 may include a main sheet 37a and a side sheet 371. The main sheet 37a may be spaced apart from the substrate 31, the light source 32, and/or the spacer 50 by a predetermined distance D1, D2, and D3. The main sheet 37a may be supported by the protrusion 82 of the housing 80. The edge of the main sheet 37a may be spaced apart from the light source 32 by a first distance D1. The edge of the main sheet 37a may be spaced apart from the substrate 31 by a second distance D2. The edge of the main sheet 37a may be spaced apart from the spacer 50 by a third distance D3. The second distance D2 may be greater than the first distance D1. The first distance D1 may be greater than the third distance D3.

The side sheet 371 may extend from the main sheet 37a. The side sheet 371 may be disposed between the main sheet 37a and the substrate 31, between the main sheet 37a and the light source 32, or between the main sheet 37a and the spacer 50. The side sheet 371 may extend from the main sheet 37a to contact the spacer 50 or to be supported by the spacer 50.

The side sheet 371 may include a first side part 371a and a second side part 371b. The first side part 371a and the second side part 371b may extend from the main sheet 37a. The first side part 371a may be next to the second side part 371b. The first side part 371a may contact the first support 511, and the second side part 371b may contact the second support 512. Both sides of the first side part 371a may form a curve and extend from the main sheet 37a. Both sides of the second side part 371b may form a curve and extend from the main sheet 37a. An arch may be formed between the first side part 371a and the second side part 372a.

The first side part 371a may include a first curved portion 371a1, a second curved portion 371a2, and a straight portion 371a3. The straight portion 371a3 may contact the spacer 50 or may be supported by the spacer 50. The first curved portion 371a1 may connect the main sheet 37a and the straight portion 371a3 of the first side part 371a. The second curved portion 371a2 may connect the main sheet 37a and the straight portion 371a3 of the first side part 371a. A distance between the first curved portion 371a1 and the second curved portion 371a2 may gradually increase in a direction from the straight portion 371a3 of the first side part 371a toward the main sheet 37a.

The second side part 371b may include a first curved portion 371b1, a second curved portion 371b2, and a straight portion 371b3. The straight portion 371b3 may contact the spacer 50 or may be supported by the spacer 50. The first curved portion 371b1 may connect the main sheet 37a and the straight portion 371b3 of the second side part 371b. The second curved portion 371b2 may connect the main sheet 37a and the straight portion 371b3 of the second side part 371b. A distance between the first curved portion 371b1 and the second curved portion 371b2 may gradually increase in a direction from the straight portion 371b3 of the second side part 371b toward the main sheet 37a.

Accordingly, the side sheet 371 may separate the main sheet 37a from the spacer 50 without being folded or bent.

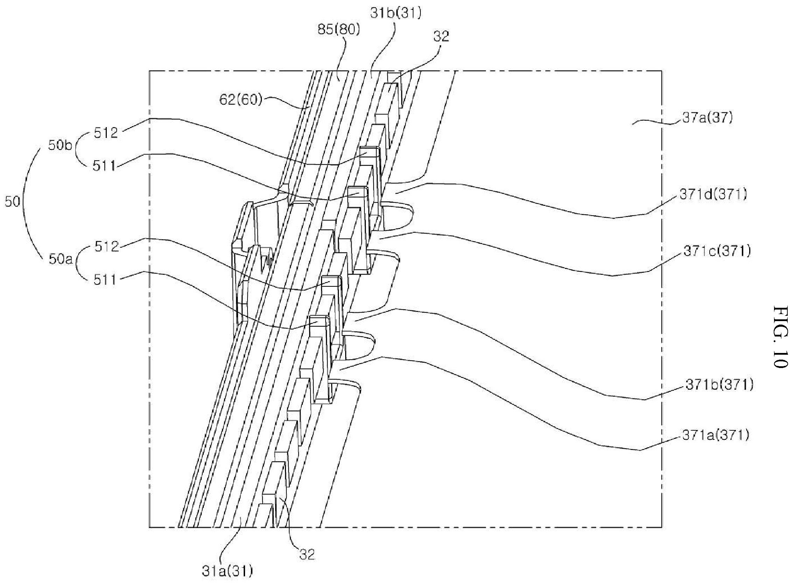

Referring to FIG. 10, the substrate 31 may include a first substrate 31a and a second substrate 31b. A longitudinal direction of the first substrate 31a may be aligned with a longitudinal direction of the second substrate 31b. The plurality of light sources 32 may be mounted on the first substrate 31a and the second substrate 31b.

The spacer 50 may include a first spacer 50a and a second spacer 50b. The first spacer 50a may be fixed to the first substrate 31a while surrounding one light source 32 among the light sources 32 of the first substrate 31a. The second spacer 50b may be fixed to the second substrate 31b while surrounding one light source 32 among the light sources 32 of the second substrate 31b.

The side sheet 371 may include a first side part 371a and a second side part 371b. The first side part 371a and the second side part 371b may correspond to the first spacer 50a. The side sheet 371 may include a third side part 371c and a fourth side part 371d. The third side part 371c and the fourth side part 371d may correspond to the second spacer 50b. A distance between the first side part 371a and the second side part 371b may correspond to a distance between the third side part 371c and the fourth side part 371d. A distance between the second side part 371b and the third side part 371c may be greater than the distance between the first side part 371a and the second side part 371b.

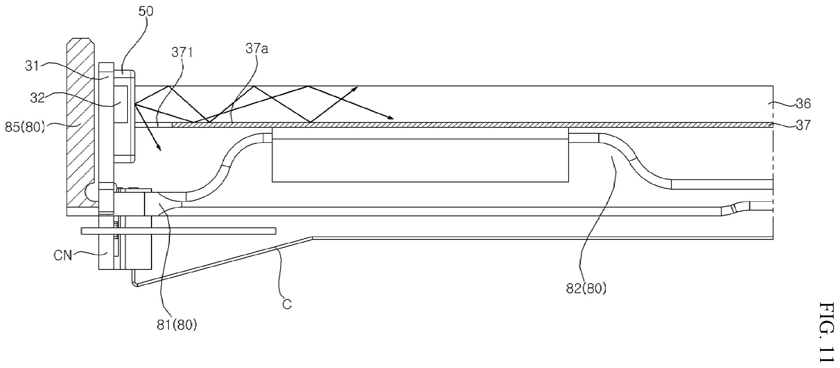

Referring to FIG. 11, the reflective sheet 37 may be disposed on the protrusion 82 of the housing 80. The protrusion 82 of the housing 80 may support the reflective sheet 37. The main sheet 37a of the reflective sheet 37 may be disposed on the protrusion 82 of the housing 80, and the side sheet 371 of the reflective sheet 37 may contact the spacer 50 or may be supported by the spacer 50.

The light guide plate 36 may be disposed on the reflective sheet 37. The light source plate 36 may be supported by the protrusion 82 of the housing 80 and/or the reflective sheet 37. A lower surface of the light guide plate 36 may contact an upper surface of the reflective sheet 37. The reflective sheet 37 may be attached to the lower surface of the light guide plate 36. When the lower surface of the light guide plate 36 is coated with a reflective material, the reflective sheet 37 may be omitted. The lower side of the light guide plate 36 may contact the spacer 50 or may be supported by the spacer 50. The lower side of the light guide plate 36 may be aligned with the light source 32. Light provided from the light source 32 by the power supplied through the cable C and a connector CN may be incident on the lower side surface of the light guide plate 36 and may travel in the light guide plate 36.

The light incident on the light guide plate 36 may travel within the light guide plate 36 or may be reflected from the reflective sheet 37. The light incident on the light guide plate 36 may travel along a distance formed between the main sheet 37a and the light source 32 by the side sheet 371. In this case, the light passes between the side sheets 371 and is directed toward the housing 80 through the lower surface of the light guide plate 36.

Accordingly, light uniformity of the display device may be improved by reducing the concentration of light(hot spots) at a boundary between the light source 32 and the light guide plate 36 or at the light guide plate 36 that is in contact with the light source 32.

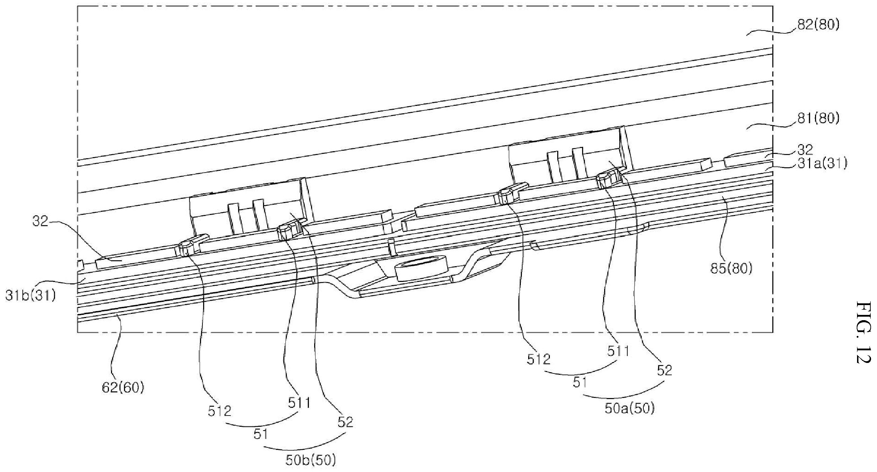

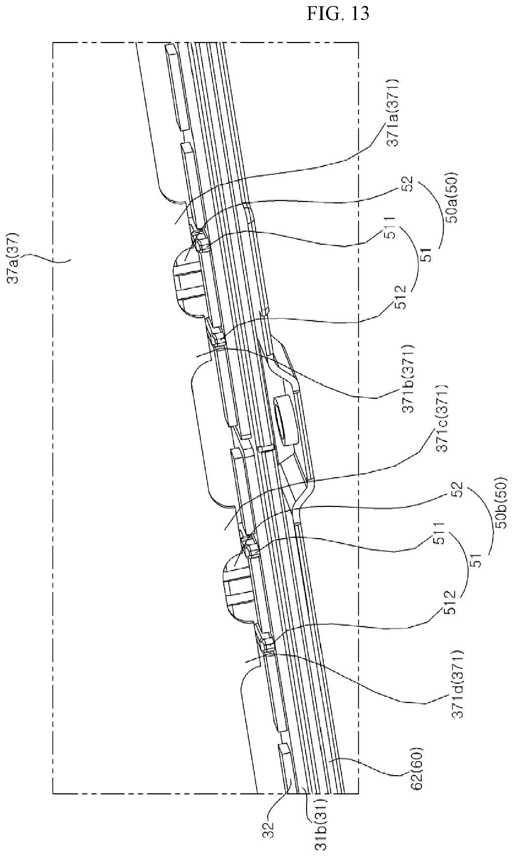

Referring to FIGS. 12 and 13, the substrate 31 may include a first substrate 31a and a second substrate 31b. A longitudinal direction of the first longitudinal substrate 31a may be aligned with a longitudinal direction of the second substrate 31b. The plurality of light sources 32 may be mounted on the first substrate 31a and the second substrate 31b.

The spacer 50 may include a first spacer 50a and a second spacer 50b. The first spacer 50a may be fixed to the first substrate 31a while surrounding one light source 32 among the light sources 32 of the first substrate 31a. The second spacer 50b may be fixed to the second substrate 31b while surrounding one light source 32 among the light sources 32 of the second substrate 31b.

The side sheet 371 may include a first side part 371a and a second side part 371b. The first side part 371a and the second side part 371b may correspond to the first spacer 50a. The side sheet 371 may include a third side part 371c and a fourth side part 371d. The third side part 371c and the fourth side part 371d may correspond to the second spacer 50b. A distance between the first side part 371a and the second side part 371b may correspond to a distance between the third side part 371c and the fourth side part 371d. A distance between the second side part 371b and the third side part 371c may be greater than the distance between the first side part 371a and the second side part 371b.

The reflective sheet 37 may be supported by the protruding wall 52 of the first spacer 50a and the protruding wall 52 of the second spacer 50b. The lower surfaces of the first side part 371a and the second side part 371b of the reflective sheet 37 may be supported by the protruding wall 52 of the first spacer 50a. The edges of the first side part 371a and the second side part 371b of the reflective sheet 37 may be supported by the first support 511 and the second support 512 of the first spacer 50a.

The lower surfaces of the third side part 371c and the fourth side part 371d of the reflective sheet 37 may be supported by the protruding wall 52 of the second spacer 50b. The edges of the third side part 371c and the fourth side part 371d of the reflective sheet 37 may be supported by the first support 511 and the second support 512 of the second spacer 50b.

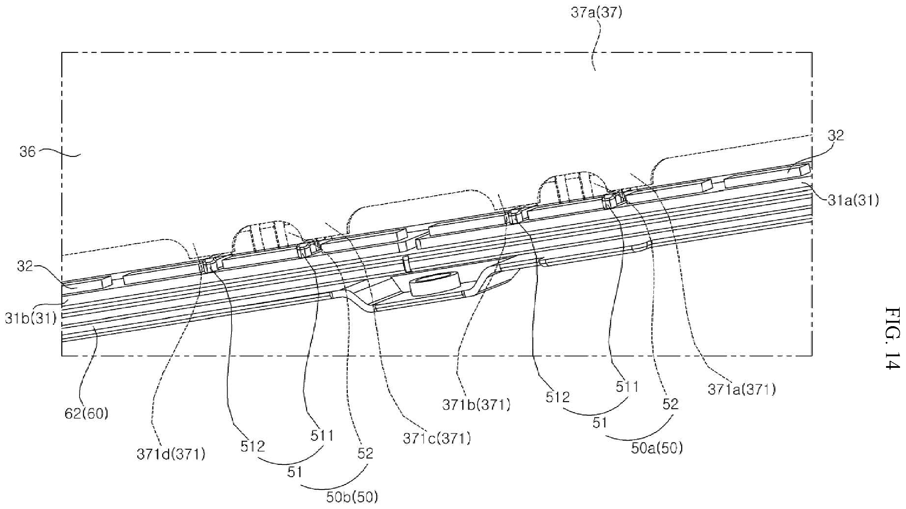

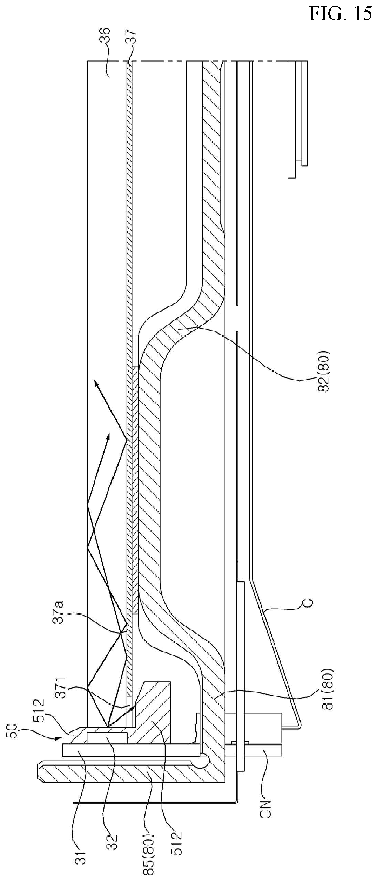

Referring to FIGS. 14 and 15 along with FIG. 13, the light guide plate 36 may be disposed on the reflective sheet 37. The light guide plate 36 may cover the main sheet 37a and the side sheet 371 of the reflective sheet 37. The lower surface of the light guide plate 36 may contact the main sheet 37a or the side sheet 371 of the reflective sheet 37. The lower side of the light guide plate 36 may be supported by the spacer 50. The lower side surface of the light guide plate 36 may contact at least one the first support 511 and the second support 512 of the spacer 50. Accordingly, the lower side of the light guide plate 36 may maintain a predetermined distance from the light source 32.

The lower surface of the light guide plate 36 that is adjacent to the lower side of the light guide plate 36 may be covered and opened by the side sheets 371. The light incident on the light guide plate 36 may leak through the lower surface of the light guide plate 36 that is opened by the side sheets 371. Luminance of the light, entering the lower surface of the light guide plate 36 that is in contact with the light source 32, may decrease at the lower surface of the light guide plate 36 that is opened by the side sheets 371. The luminance of the lower surface of the light guide plate 36 that is opened by the side sheets 371 may correspond to, or may be equal to, the luminance of the lower surface of the light guide plate 36 that is covered by the main sheet 37a.

The spacer 50 or the protruding wall 52 of the spacer 50 may include a black material. In the lower surface of the light guide plate 36 that is opened by the side sheets 371, portions that are covered by the spacer 50 or the protruding wall 52 of the spacer 50 may be in the same light condition as the lower surface of the light guide plate 36 that is opened by the side sheets 371. Accordingly, the light guide plate 36 may provide constant light uniformity.

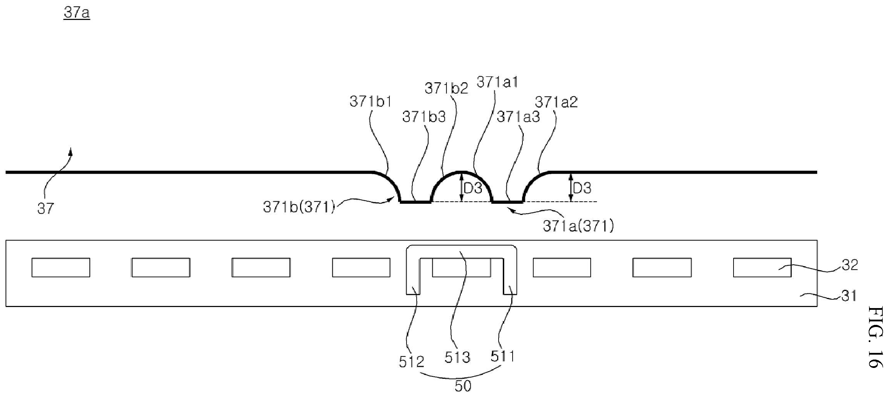

Referring to FIG. 16, the reflective sheet 37 may include a main sheet 37a and a side sheet 371. The side sheet 371 may extend from the main sheet 37a. The side sheet 371 may be disposed between the main sheet 37a and the substrate 31, between the main sheet 37a and the light source 32, or between the main sheet 37a and the spacer 50. The side sheet 371 may extend from the main sheet 37a to contact the spacer 50 or to be supported by the spacer 50.

The side sheet 371 may include a first side part 371a and a second side part 371b. The first side part 371a and the second side part 371b may extend from the main sheet 37a. The first side part 371a may be next to the second side part 371b. The first side part 371a may contact the first support 511, and the second side part 371b may contact the second support 512. Both sides of the first side part 371a may form a curve and extend from the main sheet 37a. Both sides of the second side part 371b may form a curve and extend from the main sheet 37a. An arch may be formed between the first side part 371a and the second side part 372a. For example, a height D3 of the arch may be 1.5 mm to 2.5 mm.

The first side part 371a may include a first curved portion 371a1, a second curved portion 371a2, and a straight portion 371a3. The straight portion 371a3 may contact the spacer 50 or may be supported by the spacer 50. The first curved portion 371a1 may connect the main sheet 37a and the straight portion 371a3 of the first side part 371a. The second curved portion 371a2 may connect the main sheet 37a and the straight portion 371a3 of the first side part 371a. A distance between the first curved portion 371a1 and the second curved portion 371a2 may gradually increase in a direction from the straight portion 371a3 of the first side part 371a toward the main sheet 37a. The first curved portion 371a1 may be symmetrical to the second curved portion 371a2 with respect to the straight portion 371a3. For example, the straight portion 371a3 may have a length of 3 mm to 5 mm.

The second side part 371b may include a first curved portion 371b1, a second curved portion 371b2, and a straight portion 371b3. The straight portion 371b3 may contact the spacer 50 or may be supported by the spacer 50. The first curved portion 371b1 may connect the main sheet 37a and the straight portion 371b3 of the second side part 371b. The second curved portion 371b2 may connect the main sheet 37a and the straight portion 371b3 of the second side part 371b. A distance between the first curved portion 371b1 and the second curved portion 371b2 may gradually increase in a direction from the straight portion 371b3 of the second side part 371b toward the main sheet 37a. The first curved portion 371b1 may be symmetrical to the second curved portion 371b2 with respect to the straight portion 371b3. For example, the straight portion 371b3 may have a length of 3 mm to 5 mm. For example, a distance between the straight portion 371a3 and the straight portion 371b3 may be 6 mm to 7mm.

For example, a distance between the first support 511 and the second support 512 may be 9 mm to 10.5 mm. In another example, the bridge 513 may have a length of 9 mm to 10.5 mm.

Accordingly, the side sheet 371 may separate the main sheet 37a from the spacer 50 without being folded or bent, and even when the main sheet 37a moves, the side sheet 371 may be aligned without being separated from the spacer 50.

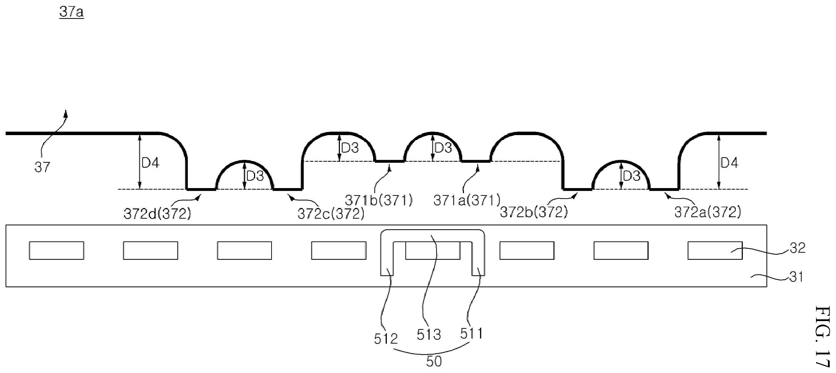

Referring to FIG. 17 along with FIG. 16, the side sheet 371 and 372 may extend from the main sheet 37a. The side sheet 371 and 372 may be disposed between the main sheet 37a and the substrate 31, between the main sheet 37a and the light source 32, or between the main sheet 37a and the spacer 50.

The side sheet 371 and 372 may include a first side sheet 371 and a second side sheet 372. The first side sheet 371 may extend from the main sheet 37a to contact the spacer 50 or to be supported by the spacer 50. The second side sheet 372 may extend from the main sheet 37a to contact the substrate 31 or to be supported by the substrate 31.

The first side sheet 371 may include a first side part 371a and a second side part 371b. The first side part 371a and the second side part 371b may extend from the main sheet 37a. The first side part 371a may be next to the second side part 371b. The first side part 371a may contact the first support 511, and the second side part 371b may contact the second support 512. Both sides of the first side part 371a may form a curve and extend from the main sheet 37a. Both sides of the second side part 371b may form a curve and extend from the main sheet 37a. An arch may be formed between the first side part 371a and the second side part 371b. The arch formed between the first side part 371a and the second side part 371b may have a height D3.

The second side sheet 372 may be disposed next to the first side sheet 371. The second side sheet 372 may include a first side part 372a and a second side part 372b. The first side part 372a and the second side part 372b may extend from the main sheet 37a. The first side part 372a may be next to the second side part 372b. The first side part 372a and the second side part 372b may contact the substrate 31. The first side part 372a may form a curve that is asymmetric at both sides, and may extend from the main sheet 37a. The second side part 372b may form a curve that is asymmetric at both sides, and may extend from the main sheet 37a. An arch may be formed between the first side part 372a and the second side part 372b. The arch formed between the first side part 371a and the second side part 372a may have a height D3. The lower side of the main sheet 37a may have a height D4 relative to the first side part 372a. The height D4 may be greater than the height D3.

The second side sheet 372 may include a third side part 372c and a fourth side part 372d. The third side part 372c and the fourth side part 372d may extend from the main sheet 37a. The third side part 372c may be next to the fourth side part 372d. The third side part 372c and the fourth side part 372d may contact the substrate 31. The third side part 372c may form a curve that is asymmetric at both sides, and may extend from the main sheet 37a. The fourth side part 372d may form a curve that is asymmetric at both sides, and may extend from the main sheet 37a. An arch may be formed between the third side part 372c and the fourth side part 372d. The arch formed between the third side part 372c and the fourth side part 372d may have a height D3. The lower side of the main sheet 37a may have a height D4 relative to the fourth side part 372d. The height D4 may be greater than the height D3.

Accordingly, the plurality of side sheets 371 and 372 may separate the main sheet 37a from the spacer 50 without being folded or bent. In addition, the weight of the main sheet 37a applied to a large screen may be supported by the plurality of side sheets 371 and 372.

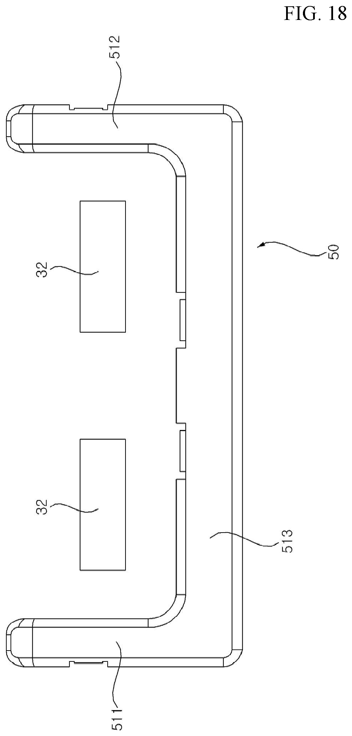

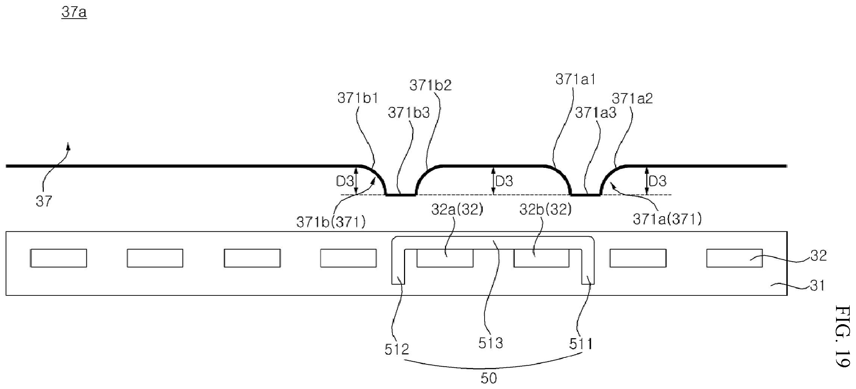

Referring to FIGS. 18 and 19, the spacer 50 may be disposed on the substrate 31. The spacer 50 may be disposed around the plurality of light sources 32. Supports 511 and 512 of the spacer 50 may contact the substrate 31 and may be disposed between the plurality of light sources 32. The supports 511 and 512 of the spacer 50 may be fixed to the substrate 31. The bridge 513 of the spacer 50 may connect the supports 511 and 512 and may be fixed to the substrate 31. For example, the spacer 50 may be injection-molded from resin or silicone.

A first support 511 may be disposed between the plurality of light sources 32. A second support 512 may be disposed between the plurality of light sources 32 and may be spaced apart from the first support 511 to the right. The plurality of light sources 32 may be disposed between the first support 511 and the second support 512. For example, a pair of light sources 32a and 32b may be disposed between the first support 511 and the second support 512. In another example, the spacer 50 may partially cover the perimeter of the pair of light sources 32a and 32b.

The reflective sheet 37 may include a main sheet 37a and a side sheet 371. The side sheet 371 may extend from the main sheet 37a. The side sheet 371 may be disposed between the main sheet 37a and the substrate 31, between the main sheet 37a and the light source 32, or between the main sheet 37a and the spacer 50. The side sheet 371 may extend from the main sheet 37a to contact the spacer 50 or to be supported by the spacer 50.

The side sheet 371 may include a first side part 371a and a second side part 371b. The first side part 371a and the second side part 371b may extend from the main sheet 37a. The first side part 371a may be next to the second side part 371b. The first side part 371a may contact the first support 511, and the second side part 371b may contact the second support 512. Both sides of the first side part 371a may form a curve and extend from the main sheet 37a. Both sides of the second side part 371b may form a curve and extend from the main sheet 37a. An arch may be formed between the first side part 371a and the second side part 372a. The arch formed between the first side part 371a and the second side part 372a may correspond to the pair of light sources 32a and 32b. The pair of light sources 32a and 32b may be disposed at the arch formed between the first side part 371a and the second side part 372a. For example, a height D3 of the arch may be 1.5 mm to 2.5 mm.

The first side part 371a may include a first curved portion 371a1, a second curved portion 371a2, and a straight portion 371a3. The straight portion 371a3 may contact the spacer 50 or may be supported by the spacer 50. The first curved portion 371a1 may connect the main sheet 37a and the straight portion 371a3 of the first side part 371a. The second curved portion 371a2 may connect the main sheet 37a and the straight portion 371a3 of the first side part 371a. A distance between the first curved portion 371a1 and the second curved portion 371a2 may gradually increase in a direction from the straight portion 371a3 of the first side part 371a toward the main sheet 37a. The first curved portion 371a1 may be symmetrical to the second curved portion 371a2 with respect to the straight portion 371a3. For example, the straight portion 371a3 may have a length of 3 mm to 5 mm.

The second side part 371b may include a first curved portion 371b1, a second curved portion 371b2, and a straight portion 371b3. The straight portion 371b3 may contact the spacer 50 or may be supported by the spacer 50. The first curved portion 371b1 may connect the main sheet 37a and the straight portion 371b3 of the second side part 371b. The second curved portion 371b2 may connect the main sheet 37a and the straight portion 371b3 of the second side part 371b. A distance between the first curved portion 371b1 and the second curved portion 371b2 may gradually increase in a direction from the straight portion 371b3 of the second side part 371b toward the main sheet 37a. The first curved portion 371b1 may be symmetrical to the second curved portion 371b2 with respect to the straight portion 371b3. For example, the straight portion 371b3 may have a length of 3 mm to 5 mm. For example, a distance between the straight portion 371a3 and the straight portion 371b3 may be 16 mm to 17mm.

For example, a distance between the first support 511 and the second support 512 may be 19 mm to 21 mm. In another example, the bridge 513 may have a length of 19 mm to 21 mm.

Accordingly, the side sheet 371 may separate the main sheet 37a from the spacer 50 without being folded or bent. The luminance of the display device 1 (see FIG. 1) may be improved by narrowing a pitch between the light sources 32 and increasing the number density of the light sources 32. In this embodiment, the spacer 50 may correspond to high-density light sources 32.

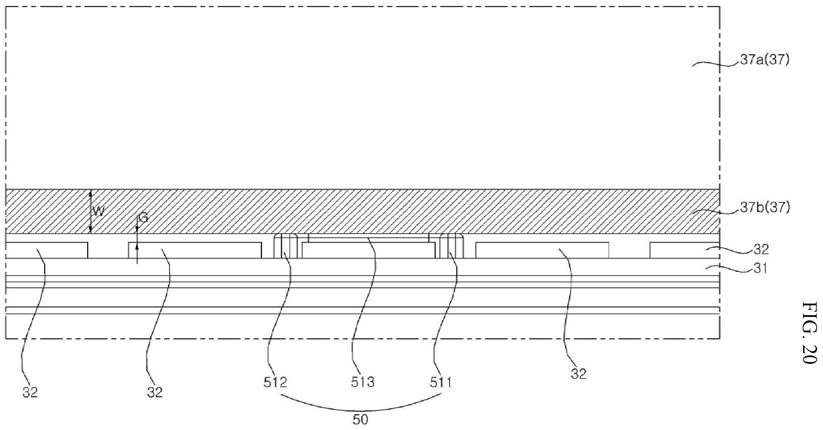

Referring to FIG. 20, the reflective sheet 37 may include a main sheet 37a and a side sheet 37b. The side sheet 37b may be adjacent to the light source 32 and the substrate 31 and may define a lower portion of the reflective sheet 37. The side sheet 37b may be disposed between the main sheet 37a and the light source 32. The side sheet 37b may be spaced apart from the light source 32 by a predetermined distance G. The side sheet 37b may have a predetermined width W. For example, the width W of the side sheet 37b may be 2 mm to 3 mm.

The reflectance of the side sheet 37b may be lower than the reflectance of the main sheet 37a. For example, when the upper surface of the main sheet 37a is coated with a white material, the upper surface of the side sheet 37b may be coated with a gray material. In another example, when the upper surface of the main sheet 37a is coated with a glossy material, the upper surface of the side sheet 37b may be coated with a matt material. In another example, the side sheet 37b may include a black material or may have a black line.

Accordingly, light uniformity of the display device may be improved by reducing the concentration of light at a boundary between the light source 32 and the light guide plate 36 (see FIG. 14) or at the light guide plate 36 (see FIG. 14) that is in contact with the light source 32.

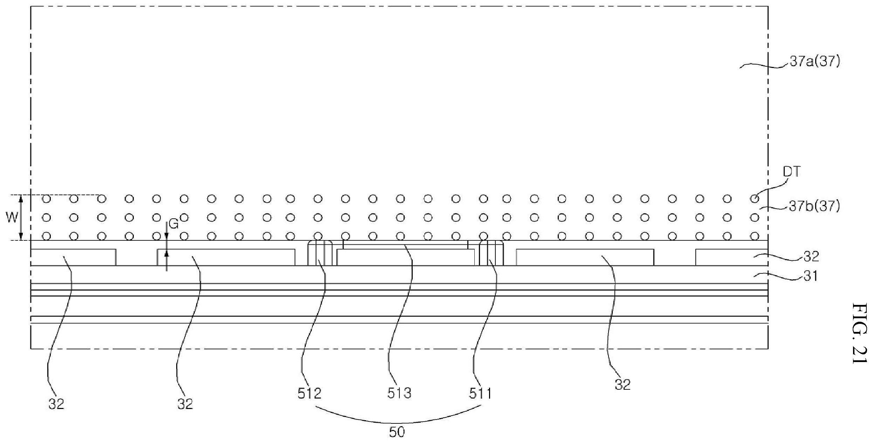

Referring to FIG. 21, the reflective sheet 37 may include a main sheet 37a and a side sheet 37b. The side sheet 37b may be adjacent to the light source 32 and the substrate 31 and may define a lower portion of the reflective sheet 37. The side sheet 37b may be disposed between the main sheet 37a and the light source 32. The side sheet 37b may be spaced apart from the light source 32 by a predetermined distance G. The side sheet 37b may have a predetermined width W. For example, the width W of the side sheet 37b may be 2 mm to 3 mm.

The side sheet 37b may have dots DT. For example, the dots DT may be printed with a black material. In another example, the dots DT may be through-holes.

Accordingly, light uniformity of the display device may be improved by reducing the concentration of light at a boundary between the light source 32 and the light guide plate 36 (see FIG. 14) or at the light guide plate 36 (see FIG. 14) that is in contact with the light source 32.

Referring to FIGS. 1 to 21, a display device includes: a display panel; a frame disposed behind the display panel; a light guide plate disposed between the display panel and the frame; a housing including a rear part disposed between the light guide plate and the frame and supporting the light guide plate, and a side part intersecting the rear part and facing one side of the light guide plate; a substrate disposed between the side part and the one side of the light guide plate and coupled to the side part; a light source mounted on the substrate and configured to provide light toward the one side of the light guide plate; and a reflective sheet disposed between the rear part of the housing and the light guide plate, wherein the reflective sheet includes: a main sheet covering the light guide plate that faces the display panel; and a side sheet extending from the main sheet toward the substrate, wherein at least a portion of the side sheet has a lower reflectance than reflectance of the main sheet.

The side sheet may include: a first side part extending from the main sheet toward the substrate; and a second side part spaced apart from the first side part and extending from the main sheet toward the substrate, wherein an arch may be formed between the first side part and the second side part of the side sheet.

The light source may include a plurality of light sources, wherein one of the plurality of light sources may be aligned with the arch formed between the first side part and the second side part.

The display device may further include a spacer disposed around the light source and fixed to the substrate, wherein the spacer may include: a first support supporting the first side part; and a second support supporting the second side part.

The spacer may further include a bridge connecting the first support and the second support and disposed adjacent to the rear part of the housing.

The spacer may further include a protruding wall connecting the first support and the second support and supporting a rear surface of the side sheet of the reflective sheet.

The protruding wall of the spacer may include a black material.

The first side part may include a straight portion extending along one side of the light guide plate, and a curved portion extending from the straight portion toward the main sheet and defining a portion of the arch; and the second side part may include a straight portion extending along one side of the light guide plate, and a curved portion extending from the straight portion toward the main sheet and defining a portion of the arch, wherein the light source may be aligned with the arch between the curved portion of the first side part and the curved portion of the second side part.

The display device may further include a spacer disposed around the light source and fixed to the substrate, wherein the spacer may include: a first support supporting the straight portion of the first side part; and a second support supporting the straight portion of the second side part.

The arch may have a height of 1.5 mm to 2.5 mm.

A plurality of light sources may be provided and/or the display device may comprise a plurality of light sources and /or the light source of the device may comprise a plurality of light sources. For example, the plurality of light sources are sequentially arranged along one side of the light guide plate, wherein the side sheet may include: a first side sheet corresponding to a portion of the plurality of light sources; and a second side sheet corresponding to another portion of the plurality of light sources, wherein the second side sheet may be disposed next to the first side sheet.

The display device may further include a spacer supporting the first side sheet and disposed around some of the plurality of light sources, wherein the second side sheet may be supported by the substrate.

The plurality of light sources may include: a first light source around which the spacer is disposed, and corresponds to the first side sheet; and a second light source spaced apart from the first light source and corresponding to the second side sheet.

The spacer may include: a first support adjacent to the first light source and fixed to the substrate; and a second support disposed opposite the first support with respect to the first light source and fixed to the substrate, wherein the first side sheet may include: a first side part supported by the first support of the spacer; and a second side part supported by the second support of the spacer, wherein the second side sheet may include: a first side part supported by the substrate at one side of the second light source; and a second side part supported by the substrate at an opposite side of the second light source.

A first arch may be formed between the first side part and the second side part of the first side sheet, and a second arch may be formed between the first side part and the second side part of the second side sheet, wherein the first light source may correspond to the first arch, and the second light source may correspond to the second arch.

The side sheet may have a plurality of holes passing through the side sheets.

An upper surface of the main sheet may be coated with a white material, and an upper surface of the side sheet may be coated with a black material.

The main sheet may be coated with a glossy material, and the side sheet may be coated with a matt material.

The side sheet may have a black line.

The light provided by the light source may be incident on the light guide plate and reflected from the main sheet, and some of the light may be absorbed by the side sheet.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A display device comprising:
a display panel;
a frame disposed behind the display panel;
a light guide plate disposed between the display panel and the frame;
a housing including a rear part disposed between the light guide plate and the frame and supporting the light guide plate, and a side part intersecting the rear part and facing one side of the light guide plate;
a substrate disposed between the side part and the one side of the light guide plate and coupled to the side part;
a light source mounted on the substrate and configured to provide light toward the one side of the light guide plate; and
a reflective sheet disposed between the rear part of the housing and the light guide plate,
wherein the reflective sheet comprises:
a main sheet covering the light guide plate that faces the display panel; and
a side sheet extending from the main sheet toward the substrate,
wherein at least a portion of the side sheet has a lower reflectance than reflectance of the main sheet.

2. The display device of claim 1, wherein the side sheet comprises:
a first side part extending from the main sheet toward the substrate; and
a second side part spaced apart from the first side part and extending from the main sheet toward the substrate,
wherein an arch is formed between the first side part and the second side part of the side sheet, wherein, optionally, the arch has a height of 1.5 mm to 2.5 mm.

3. The display device of claim 2, wherein the light source comprises a plurality of light sources,
wherein one of the plurality of light sources is aligned with the arch formed between the first side part and the second side part.

4. The display device of claim 2 or 3, further comprising a spacer disposed around the light source and fixed to the substrate,
wherein the spacer comprises:
a first support supporting the first side part; and
a second support supporting the second side part.

5. The display device of claim 4, wherein the spacer further comprises {i} a bridge connecting the first support and the second support and disposed adjacent to the rear part of the housing and/or {ii} a protruding wall connecting the first support and the second support and supporting a rear surface of the side sheet of the reflective sheet, wherein, optionally, the protruding wall of the spacer comprises a black material.

6. The display device of any one of claims 2 to 5, wherein:
the first side part comprises a straight portion extending along one side of the light guide plate, and a curved portion extending from the straight portion toward the main sheet and defining a portion of the arch; and
the second side part comprises a straight portion extending along one side of the light guide plate, and a curved portion extending from the straight portion toward the main sheet and defining a portion of the arch,
wherein the light source is aligned with the arch between the curved portion of the first side part and the curved portion of the second side part.

7. The display device of claim 6, comprising a or the spacer disposed around the light source and fixed to the substrate,
wherein the spacer comprises:
a or the first support supporting the straight portion of the first side part; and
a or the second support supporting the straight portion of the second side part.

8. The display device of any one of claims 1 to 7, wherein a plurality of light sources are provided,
wherein the plurality of light sources are sequentially arranged along one side of the light guide plate,
wherein the side sheet comprises:
a first side sheet corresponding to a portion of the plurality of light sources; and
a second side sheet corresponding to another portion of the plurality of light sources,
wherein the second side sheet is disposed next to the first side sheet.

9. The display device of claim 8, comprising a or the spacer supporting the first side sheet and disposed around some of the plurality of light sources,
wherein the second side sheet is supported by the substrate.

10. The display device of claim 8 or 9, wherein the plurality of light sources comprise:
a first light source around which the spacer is disposed, and corresponds to the first side sheet; and
a second light source spaced apart from the first light source and corresponding to the second side sheet.

11. The display device of claim 10, wherein the spacer comprises:
a or the first support adjacent to the first light source and fixed to the substrate; and
a or the second support disposed opposite the first support with respect to the first light source and fixed to the substrate,
wherein the first side sheet comprises:
a first side part supported by the first support of the spacer; and
a second side part supported by the second support of the spacer,
wherein the second side sheet comprises:
a first side part supported by the substrate at one side of the second light source; and
a second side part supported by the substrate at an opposite side of the second light source.

12. The display device of claim 11, wherein a first arch is formed between the first side part and the second side part of the first side sheet, and a second arch is formed between the first side part and the second side part of the second side sheet,
wherein the first light source corresponds to the first arch, and the second light source corresponds to the second arch.

13. The display device of any one of claims 1 to 12, wherein: {a} the side sheet has a plurality of holes passing through the side sheets; and/or the side sheet has a black line.

14. The display device of claim 1, wherein: {i} an upper surface of the main sheet is coated with a white material, and an upper surface of the side sheet is coated with a black material; and/or {ii} the main sheet is coated with a glossy material, and the side sheet is coated with a matt material.

15. The display device of any one of claims 1 to 14, wherein the light provided by the light source is incident on the light guide plate and reflected from the main sheet, and some of the light is absorbed by the side sheet.
